(19) Europäisches Patentamt
European Patent Office
Office européen des brevets

(11) **EP 4 245 447 B1**

(12) **EUROPEAN PATENT SPECIFICATION**

(45) Date of publication and mention
of the grant of the patent:
**18.02.2026  Bulletin 2026/08**

(21) Application number: **22213386.0**

(22) Date of filing: **14.12.2022**

(51) International Patent Classification (IPC):
**B23C 5/10** *(2006.01)*

(52) Cooperative Patent Classification (CPC):
**B23C 5/1009; B23C 5/10;** B23C 2210/54

(54) **BALL END MILL**

KUGELFRÄSER

FRAISE À BOUT SPHÉRIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **18.03.2022  JP 2022044267**

(43) Date of publication of application:
**20.09.2023  Bulletin 2023/38**

(73) Proprietor: **UNION TOOL CO.**
**Tokyo (JP)**

(72) Inventors:
• **YOSHIMURA, Shota**
**Tokyo (JP)**
• **SUZUKI, Shuntaro**
**Tokyo (JP)**
• **WATANABE, Hidehito**
**Tokyo (JP)**

(74) Representative: **Kramer Barske Schmidtchen**
**Patentanwälte PartG mbB**
**European Patent Attorneys**
**Landsberger Strasse 300**
**80687 München (DE)**

(56) References cited:
**EP-A1- 3 646 976      WO-A1-2015/060392**
**JP-A- 2000 233 311    JP-A- 2022 073 141**
**JP-A- H01 228 711     US-B2- 7 909 545**

## Description

### TECHNICAL FIELD

The present invention relates to a ball end mill.

### BACKGROUND ART

Ball end mills are widely used in the fields of die machining and component machining. A ball end mill is provided with an arc-shaped ball blade having a hemispherical locus of rotation at the tip of the tool, and using a ball end mill, it is possible to obtain a favorable machined surface by cutting a curved surface having a complicated shape or a draft surface (inclined flat surface) of a die by using a ball blade of which the rake angle and clearance angle are appropriately designed.

However, there has been a problem in that the tip portion of a ball end mill (the top of the arc-shaped ball blade and the vicinity thereof) has poorer cutting performance than the outer peripheral portion of the ball blade, and it is difficult to obtain a favorable machined surface in the machining of a flat surface orthogonal to a tool rotation axis, such as the bottom surface of a die.

In view of this, finishing ball end mills such as that disclosed in Patent Document 3 have heretofore been proposed, such ball end mills having the purpose of obtaining a favorable glossy machined surface even in the machining of a flat surface orthogonal to a tool rotation axis, such as the bottom surface of a die.

[Prior Art Documents]

[Patent Document]

[Patent Document 1] EP 3 646 976 A1; [Patent Document 2] JP H01 228711 A; [Patent Document 3] Japanese Laid-open Patent Application No. 2000-233311

US 7,909,545 B2 discloses a ballnose end mill, which has a center area that is designed for improved ejection of chips produced during cutting of a workpiece.

### SUMMARY OF THE INVENTION

### PROBLEMS THE INVENTION IS INTENDED TO SOLVE

In the ball end mill of Patent Document 3, two ball blades are arranged in center-rising positions, either a chisel angle of a chisel edge constituted of flanks of the two ball blades is set to 155 degrees or more or a ratio of spaces between rake face inner edges of the two blades formed as gashes in the ball blades to chisel edge length is 1/7-1/3, and a flat surface orthogonal to a tool rotation axis, such as a bottom surface of a die, is cut by a cutting action performed by the chisel edge.

However, ball end mills having a chisel edge have been widely used for a long time, and the chisel edge is an intersection ridgeline where the flanks of the ball blades intersect at a large obtuse angle; therefore, the rake angle is a large negative rake angle and gouging is caused in the machined surface. Therefore, even if the angle (chisel angle) and length at which the chisel edge is placed are adjusted to appropriate values as disclosed in Patent Document 3, it is difficult to obtain a machined surface (flat surface) having such high gloss that a polishing step (finishing treatment) can be omitted; therefore, at present, a polishing step (finishing treatment) must be performed after cutting.

The present invention was devised in view of the current state, it being an object of the invention to provide a ball end mill suitable for finishing, with which it is possible to obtain a high-gloss machined surface and to omit a polishing step or reduce the number of polishing man-hours in the cutting of a flat surface orthogonal to a tool rotation axis, such as a bottom surface of a die, using a tip of a tool.

### DISCLOSURE OF THE INVENTION

The main points of the present invention are described below with reference to the accompanying drawings.

In a first aspect, the present invention relates to a ball end mill in accordance with claim 1.

The present invention also relates to the ball end mill according to the first aspect, characterized in that the flat surface 6 is continuous with the tip-end flanks 4 and the rake faces 3 of the pair of ball blades 5, which are provided in 180 degree rotational symmetry with respect to the tool rotation axis *a*.

The present invention also relates to the ball end mill according to either the first or second aspect, characterized in that the central cutting blades 7 are provided up to the vicinity of the tool rotation axis *a*.

The present invention also relates to the ball end mill according to any one of the first to third aspects, characterized in that the flat surface 6 is continuous with the tip-end flanks 4, and the flat surface 6 is provided such that in a tool tip view, with respect to a normal 9 to the central cutting blades 7 passing through the tool rotation axis a or to extensions 8 of the central cutting blades 7, taking the ball-blade 5 sides with which the central cutting blades 7 are continuous as positive sides and the sides opposite thereto as negative sides, intersection points P2 described in (2) below are either located on the negative sides or located on the positive sides where a separation distance X in a direction between intersection points P1 described in (1) below and intersection points P2 along the central cutting blades 7 is 0-10% (inclusive) of a tool outer diameter D.

(1) Intersection points P1: in a tool tip view, intersection points between central cutting blades 7 or extensions 8 of the central cutting blades 7, and a normal 9 to the central cutting blades 7 passing through the tool rotation axis a or to the extensions 8 of the central cutting blades 7
(2) Intersection points P2: in a tool tip view, intersection points between ridgelines 10 on the sides further from the ball blades 5 among ridgelines 10 formed of the flat surface 6 and the tip-end flanks 4, and the edges of the tip ends of the swarf discharge grooves 2 having the ball blades 5 and the central cutting blades 7 continuous with the ball blades 5

The present invention also relates to the ball end mill according to any one of the first to fourth aspects, characterized in that in a tool tip view of the flat surface 6, taking a space between two ridgelines 10 formed of the flat surface 6 and the tip-end flanks 4 of the pair of ball blades 5 provided in 180 degree rotational symmetry with respect to the tool rotation axis a to be a width W of the flat surface 6, the width W is set to the following range.

$$0.005 \text{ mm} \leq W \leq 0.2D \text{ (D being the tool outer diameter)}$$

The present invention also relates to the ball end mill according to the fifth aspect, characterized in that the width W of the flat surface 6 is set to the following ranges.

If tool outer diameter $D > \phi$ 1.5 mm, then 0.01 mm $\leq W \leq$ 0.3 mm
If tool outer diameter $D \leq \phi$ 1.5 mm, then 0.01 mm $\leq W \leq$ 0.2D

## EFFECT OF THE INVENTION

Due to being configured as described above, the present invention is a ball end mill suitable for finishing, with which it is possible to obtain a high-gloss machined surface and to omit a polishing step or reduce the number of polishing man-hours in the cutting of a flat surface orthogonal to a tool rotation axis, such as a bottom surface of a die, using a tip of a tool.

## BRIEF DESCRIPTION OF THE DRAWINGS

FIG. 1 is an explanatory plan view of the main part of the present embodiment as seen from a tip of a tool;
FIG. 2 is (a) an explanatory left-side view and (b) an explanatory front view of the main part of the present embodiment;
FIG. 3 is an explanatory drawing of a tool tip view, showing the positive sides, negative sides, separation distance X, and width W of the flat surface in the present embodiment;
FIG. 4 includes tool-tip-view images for instances when the intersection points P2 are located on the positive side and the negative side in the present embodiment;
FIG. 5 is a photograph of the results of evaluating glossiness of 0° surfaces obtained with the present embodiment and a conventional product in Test Example 3;
FIG. 6 is a graph of the results of measuring arithmetic mean roughness Ra of 0° surfaces after machining times of 20 minutes and 60 minutes obtained with the present embodiment and the conventional product in Test Example 3;
FIG. 7 is a graph of the results of measuring arithmetic mean roughness Ra of 0° surfaces and 45° surface after a machining time of 20 minutes obtained with the present embodiment and the conventional product in Test Example 3;
FIG. 8 is a tool-tip-view explanatory plan diagram showing the main parts of another example 1 of the present embodiment;
FIG. 9 includes (a) an explanatory left-side view and (b) an explanatory front view showing the main parts of the another example 1 of the present embodiment;

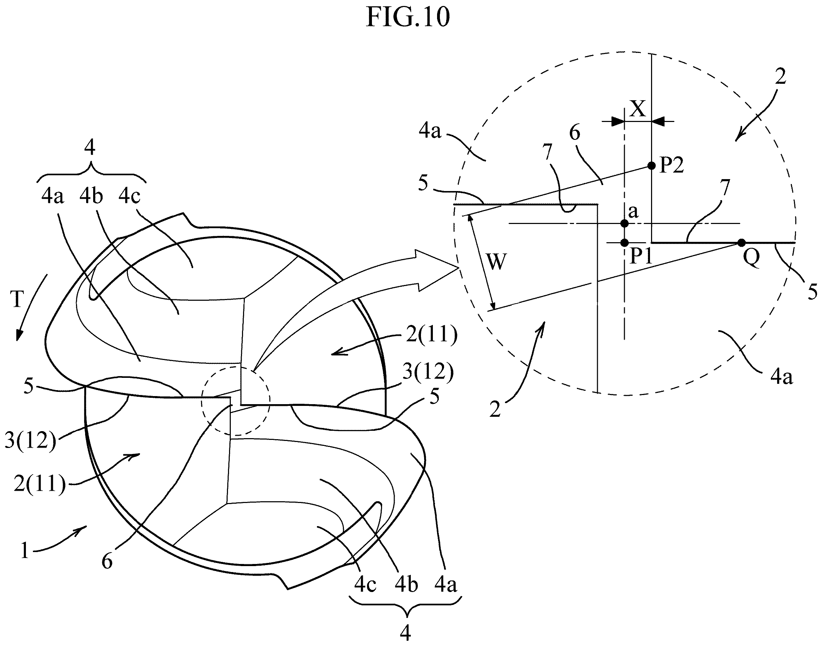

FIG. 10 is a tool-tip-view explanatory plan diagram showing the main parts of another example 2 of the present embodiment; and

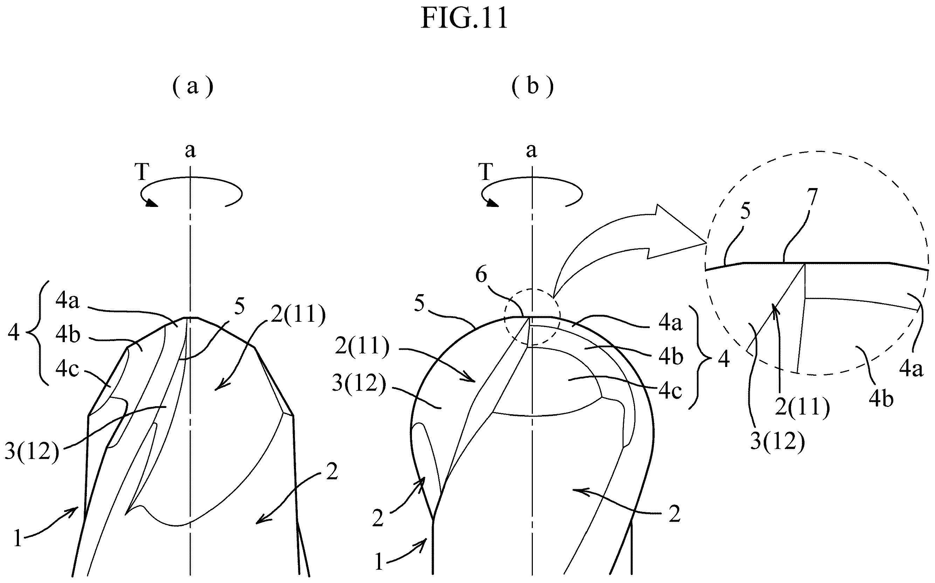

FIG. 11 includes (a) an explanatory left-side view and (b) an explanatory front view showing the main parts of the another example 2 of the present embodiment.

**BEST MODE FOR CARRYING OUT THE INVENTION**

Preferred embodiments of the present invention are straightforwardly described on the basis of the drawings while indicating the effects of the present invention.

In the present invention, a flat surface 6 orthogonal to a tool rotation axis a of a tool body 1 is provided at the tip of the tool. Therefore, there is no chisel edge having a large negative rake angle, and gouging due to the influence of the chisel edge is prevented as much as possible.

In addition, in the present invention, intersection ridgelines between the flat surface 6 and rake faces 3 are configured as central cutting blades 7 continuous with ball blades 5. Therefore, the central cutting blades 7 have the same rake angle as the ball blades 5 and exhibit the same high cutting performance as the ball blades 5, and in the machining of a flat surface orthogonal to the tool rotation axis a, because of the high cutting performance of the central cutting blades 7 and the burnishing effect due to the sliding contact action of the flat surface 6 on the cutting surface, cutting marks during cutting by the central cutting blades 7 are minimized, and it is possible to obtain a machined surface having excellent glossiness equivalent to or better than that obtained by cutting with the ball blades 5.

**EXAMPLES**

Specific examples of the present invention shall be described with reference to the drawings.

The present embodiment is a ball end mill in which a plurality of swarf discharge grooves 2 opening at the tip and leading from a tool-tip-end side to a tool-base-end side are formed in the outer periphery of the tool body 1, and ball blades 5 are provided at intersection ridgelines between rake faces 3 of the swarf discharge grooves 2 and tip-end flanks 4 of the tool body 1, wherein a flat surface 6 orthogonal to the tool rotation axis a of the tool body 1 is provided at a tool tip portion, and the intersection ridgelines between the flat surface 6 and the rake faces 3 are configured as central cutting blades 7 continuous with the ball blades 5.

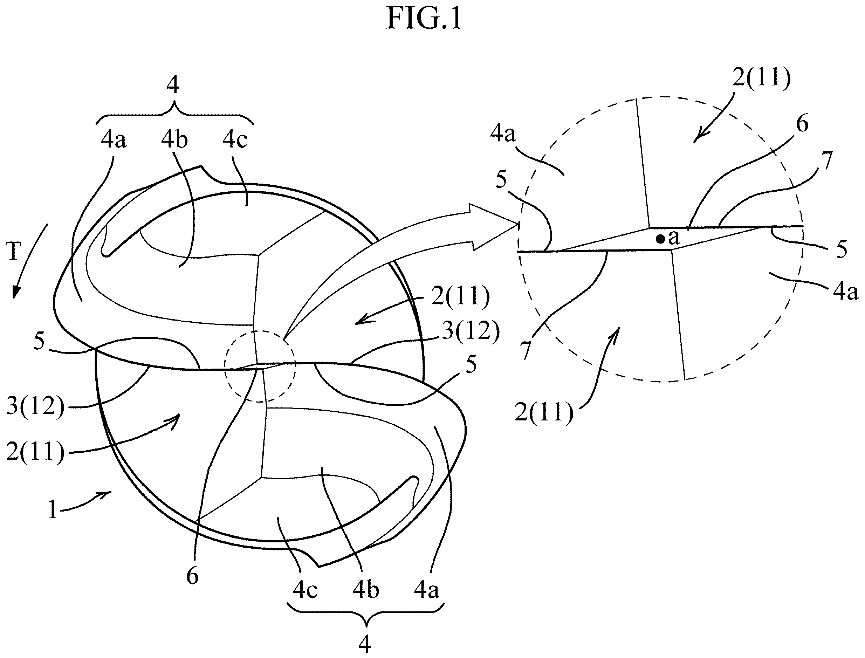

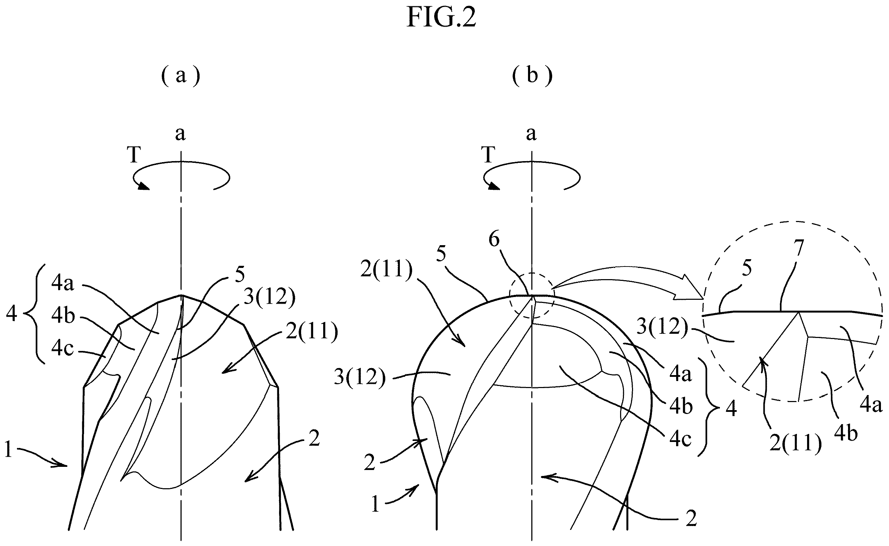

Specifically, the present embodiment is a case in which the ball end mill of the present invention is configured as a two-bladed ball end mill in which two helical swarf discharge grooves 2 are provided, and ball blades 5 are provided at intersection ridgelines between tip-end flanks 4 of a tool body 1 and two rake faces 3 formed at the tip ends of the swarf discharge grooves 2, as shown in FIGS. 1 and 2.

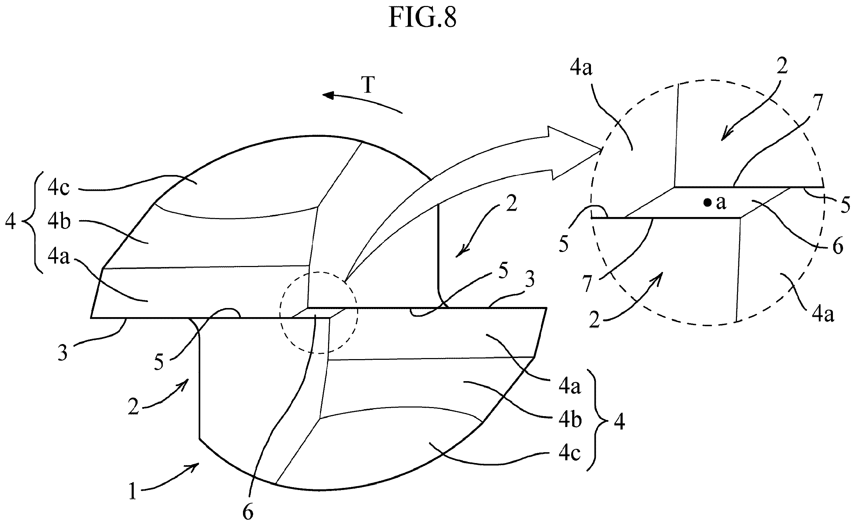

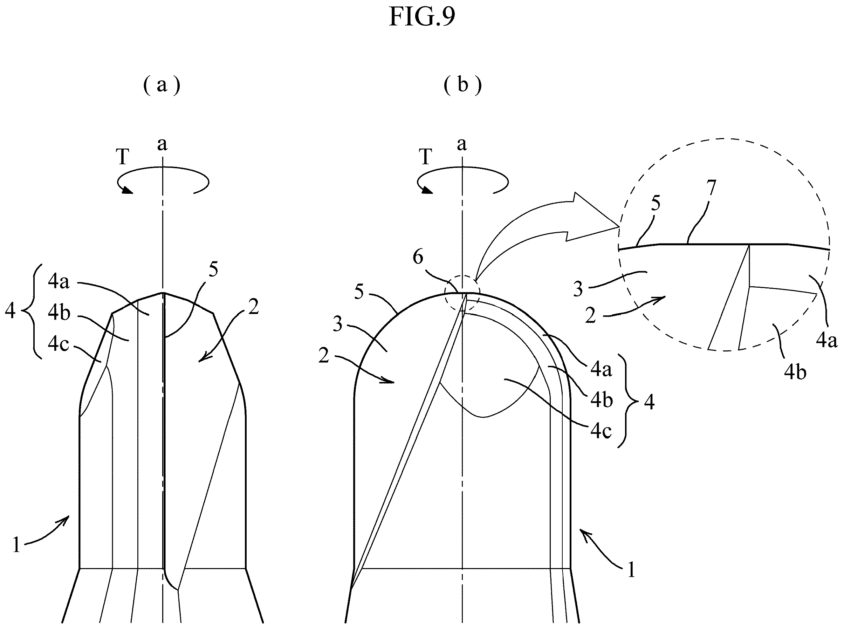

More specifically, in the present embodiment, gashes 11, which are parts of the swarf discharge grooves 2, are formed at the tip end parts of the rake faces 3 (wall surfaces that face forward in a tool rotation direction) of the swarf discharge grooves 2 to provide gash faces 12 that face forward in the tool rotation direction, and the gash faces 12 serve as the rake faces 3 in the tool tip. Instead of this configuration, the present embodiment may also be configured as, for example, a "straight-blade" ball end mill in which linear swarf discharge grooves 2 are provided, gashes 11 are not provided, i.e., gash faces 12 are not provided, and wall surfaces that face forward in the tool rotation direction of the swarf discharge grooves 2 are configured as rake faces 3 in the tool tip, as is the case in another example 1 shown in FIGS. 8 and 9.

In addition, the present embodiment is configured into a "center-rising" shape in which in a tool tip view, the central cutting blades 7 near the tool rotation axis a are placed forward in the tool rotation direction in relation to the tool rotation axis *a.*

Specifically, the present embodiment is configured into a center-rising shape in which in a tool tip view, swarf discharge grooves 2 (gashes 11) opening at the tip ends are provided outside the tool rotation axis *a* so as to leave a core around the tool rotation axis *a* from the outer peripheral side of the tool, and the central cutting blades 7 are provided near the tool rotation axis a at the edges of the tip ends of the swarf discharge grooves 2 (gashes 11). The swarf discharge grooves 2 (gashes 11) constituting this center-rising shape may be provided so as to extend past the tool rotation axis a or not extend past the tool rotation axis a from the outer peripheral side of the tool in a tool tip view.

In addition, the configuration previously described, i.e., the configuration of the center-rising shape shown in FIGS. 1-4, 8, and 9 is not provided by way of limitation on the present embodiment; for example, the present embodiment may be configured into a "center-falling" shape in which the central cutting blades 7 near the tool rotation axis a are arranged rearward in the tool rotation direction in relation to the tool rotation axis *a,* in a tool tip view.

The constituent parts relating to the present embodiment are described in detail below.

The tip-end flanks 4 of the present embodiment are each constituted of a first flank 4a inclined at a predetermined angle relative to the tool rotation axis *a,* a second flank 4b provided on the rear side of the first flank 4a in the tool rotation direction and inclined at a different angle than the first flank 4a, and a third flank 4c provided on the rear side of the second flank 4b in the tool rotation direction and inclined at a different angle than the second flank 4b, as shown in FIGS. 1 and 2.

The two ball blades 5 (pair of ball blades 5) are provided at the intersection ridgelines between the first flanks 4a of the tip-end flanks 4 and the rake faces 3 (gash faces 12) facing forward in the tool rotation direction, and are provided in 180 degree rotational symmetry with respect to the tool rotation axis *a* as shown in FIG.1. The configuration of the two-bladed ball end mill described above is not provided by way of limitation on the present embodiment; ball blades other than the two (pair of) ball blades 5 may be provided to form a multi-bladed ball end mill having three or more ball blades.

The flat surface 6, as previously described, is provided to the tool tip as one flat surface orthogonal to the tool rotation axis *a,* located between and continuous with the two tip-end flanks 4. In the drawing, the arrow with the symbol T indicates the tool rotation direction.

Specifically, the flat surface 6 is provided so as to be continuous with the first flanks 4a and the rake faces 3 of the two (pair of) ball blades 5, the intersection ridgelines between the flat surface 6 and the rake faces 3 of the ball blades 5 are continuous with the ball blades 5, and the flat surface 6 is configured so as to have central cutting blades 7 having the same rake angle as the ball blades 5.

In the present embodiment, the flat surface 6 is formed such that the central cutting blades 7 are provided up to the vicinity of the tool rotation axis a, and is thereby configured such that in the machining of a flat surface orthogonal to the tool rotation axis *a,* a machined surface having excellent glossiness and minimal gouging is obtained.

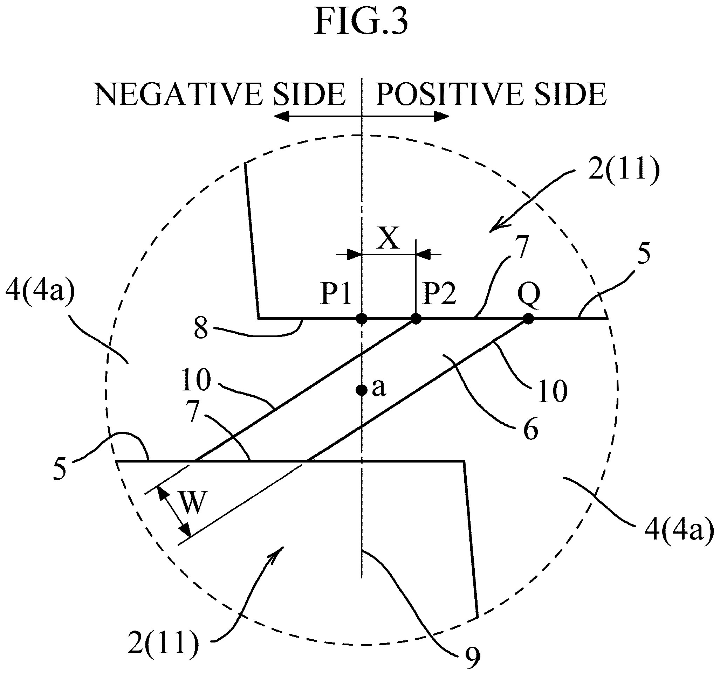

Specifically, in the present embodiment, the flat surface 6 is continuous with the tip-end flanks 4 (the first flanks 4a) as shown in FIG. 3. In addition, the flat surface 6 is provided such that in a tool tip view, with respect to a normal 9 to the central cutting blades 7 passing through the tool rotation axis a or to extensions 8 of the central cutting blades 7, taking the ball-blade 5 sides with which the central cutting blades 7 are continuous as positive sides and the sides opposite thereto as negative sides, intersection points P2 (in a tool tip view, intersection points between ridgelines 10 on the sides further from the ball blades 5 among ridgelines 10 formed of the flat surface 6 and the tip-end flanks 4, and the edges of the tip ends of the swarf discharge grooves 2 having the ball blades 5 and the central cutting blades 7 continuous with the ball blades 5) are either located on the negative sides or located on the positive sides where a separation distance X between intersection points P1 (in a tool tip view, intersection points between the central cutting blades 7 or the extensions 8 of the central cutting blades 7, and a normal 9 to the central cutting blades 7 passing through the tool rotation axis a or of the extensions 8 of the central cutting blades 7) and the intersection points P2 in the directions along the central cutting blades 7 is 0-10% (inclusive) of a tool outer diameter D, whereby the central cutting blades 7 are provided up to the vicinity of the tool rotation axis *a.*

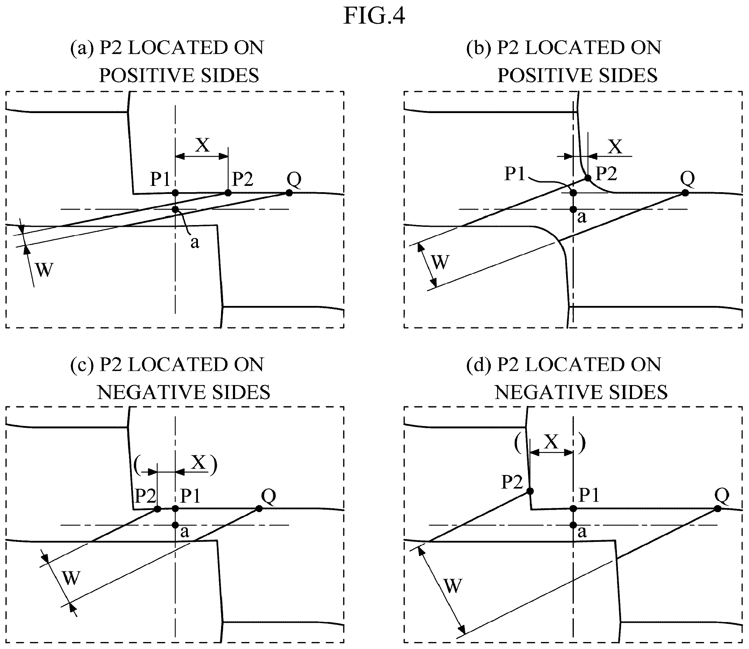

In the present embodiment, the central cutting blades 7 are formed linearly on the intersection ridgelines between the flat surface 6 and the rake faces 3 (gash faces 12) that face forward in the tool rotation direction, as shown in FIGS. 3 and 4. The central cutting blades 7 may be formed entirely linearly or partially linearly, e.g., the parts from intersection points Q between the central cutting blades 7 and the ball blades 5 continuous therewith (intersection points between ridgelines 10 near the ball blades 5 among the ridgelines 10 formed of the flat surface 6 and the tip-end flanks 4 (first flanks 4a), and the edges of the tip ends of the swarf discharge grooves 2 having the ball blades 5 and the central cutting blades 7 continuous with the ball blades 5) toward the tool interior (in the directions opposite of the ball blades 5, i.e., the negative sides) may be formed linearly. FIG. 4(b), described hereinafter, is one example of an aspect in which parts are linear in this manner. In this case, the separation distance X can be confirmed by ascertaining the linear portions to determine the extensions 8 of the central cutting blades 7 and the directions along the central cutting blades 7.

FIG. 4 includes images of cases in which the intersection points P2 are on the positive sides and cases in which said points are on the negative sides in a tool tip view in the present embodiment, in which the central cutting blades 7 are formed linearly. FIGS. 4(a) and (b) are images of cases in which the intersection points P2 are on the positive sides, and FIGS. 4(c) and (d) are images of cases in which the intersection points P2 are on the negative sides.

Specifically, FIGS. 4(a) and (b) are examples in which the intersection points P2 are at the edges of the tip ends of the swarf discharge grooves 2 having the central cutting blades 7, and are located on the positive-side edges of the tip ends of the wall surfaces (rake faces 3) that face forward in the tool rotation direction. FIG. 4(b) is an example in which the central cutting blades 7 are formed of linear portions facing toward the tool interior (in the directions opposite from the ball blades 5, i.e., to the negative sides) from the intersection points Q between the central cutting blades 7 and the ball blades 5 continuous therewith, and curved portions continuous with the edges of the walls surfaces that face rearward in the tool rotation direction, and the intersection points P2 are located in the curved portions.

In addition, FIG. 4(c) is an example in which the intersection points P2 are at the edges of the tip ends of the swarf discharge grooves 2 having the central cutting blades 7, and are located on the negative-side edges of the tip ends of the same faces as the wall surfaces (rake faces 3) that face forward in the tool rotation direction. FIG. 4(d) is an example in which the intersection points P2 are at the edges of the tip ends of the swarf discharge grooves 2 having the central cutting blades 7, and are located on the edges of the tip ends of the wall surfaces that face rearward in the tool rotation direction, located on the negative sides.

As previously described, the separation distance X in the present embodiment is one of the invention elements (indicators) used when the intersection points P2 are located on the positive sides, but in order to facilitate understanding of the details of Test Example 1 and Test Example 2 (described hereinafter), the portion corresponding to the separation distance X is shown in parentheses in FIGS. 4(c) and (d). In this case, X has a negative value.

Furthermore, the central cutting blades 7 may be formed in a curved shape instead of a linear shape. For example, as shown in FIGS. 3 and 4(a), when the intersection points P2 are located on the positive sides, these drawings show central cutting blades 7 formed into linear shapes and having end points at the intersection points Q and the intersection points P2, but the central cutting blades 7 may be formed into curved shapes that curve forward in the tool rotation direction or rearward in the tool rotation direction, or the central cutting blades 7 may be formed into wavy line shapes. In this case, the separation distance X can be confirmed by regarding virtual straight lines connecting the intersection points Q and the intersection points P2 as the central cutting blades 7 and determining the extensions 8 of the central cutting blades 7 and the directions along the central cutting blades 7.

Furthermore, in a tool tip view of the flat surface 6 of the present embodiment as shown in FIG. 3, the space between the two ridgelines 10, which are formed of the flat surface 6 and the tip-end flanks 4 (first flanks 4a) of the pair of ball blades 5 provided in 180 degree rotational symmetry with respect to the tool rotation axis $a$, is the width W of the flat surface 6, and the flat surface 6 of the present embodiment is formed such that the width W is 0.005 mm $\leq$ W $\leq$ 0.2D (D being the tool outer diameter).

Specifically, as shall be described hereinafter as a more desirable specification, the flat surface 6 of the present embodiment is formed such that when the tool outer diameter D is greater than $\phi$ 1.5 mm, the width W is 0.01 mm $\leq$ W $\leq$ 0.3 mm, and when the tool outer diameter D is $\phi$ 1.5 mm or less, the width W is 0.01 mm $\leq$ W $\leq$ 0.2D.

The effects of the present embodiment configured as described above shall be described below.

In the present embodiment, the flat surface 6 orthogonal to the tool rotation axis a of the tool body 1 is provided at the tool tip, intersection ridgelines between the flat surface 6 and rake faces 3 are configured as the central cutting blades 7 continuous with the ball blades 5, the central cutting blades 7 therefore have rake angles similar to those of the ball blades 5 and exhibit high cutting performance as do the ball blades 5, and because of a burnishing effect due to the favorable cutting action provided by the central cutting blades 7 and a sliding contact action of the flat surface 6 on the cut surfaces cut by the central cutting blades 7, cutting marks during cutting performed by the central cutting blades 7 are minimized, and it is possible to obtain a high-gloss machined surface even when machining a flat surface orthogonal to the tool rotation axis $a$.

In addition, in the present embodiment, the flat surface 6 is continuous with tip-end flanks 4 (first flanks 4a), and the flat surface 6 is provided such that in a tool tip view, with respect to a normal 9 to the central cutting blades 7 passing through the tool rotation axis a or to extensions 8 of the central cutting blades 7, taking the ball-blade 5 sides with which the central cutting blades 7 are continuous as positive sides and the sides opposite thereto as negative sides, intersection points P2 (when viewed from the tool tip, intersection points between ridgelines 10 on the sides further from the ball blades 5 among ridgelines 10 formed of the flat surface 6 and the tip-end flanks 4, and the edges of the tip ends of swarf discharge grooves 2 having the ball blades 5 and the central cutting blades 7 continuous with the ball blades 5) are either located on the negative sides or located on the positive sides where a separation distance X between intersection points P1 (in a tool tip view, intersection points between the central cutting blades 7 or extensions 8 of the central cutting blades 7, and a normal 9 to the central cutting blades 7 passing through the tool rotation axis a or of the extensions 8 of the central cutting blades 7) and the intersection points P2 in the directions along the central cutting blades 7 is 0-10% (inclusive) of the tool outer diameter D, whereby the central cutting blades 7 are provided up to the vicinity of the tool rotation axis $a$. As a result, a machined surface with little gouging is obtained in the machining of a flat surface orthogonal to the tool rotation axis $a$.

In addition, in the present embodiment, the flat surface 6 is formed such that the width W thereof is 0.005 mm $\leq$ W $\leq$ 0.2D. Furthermore, as a more preferred specification, the flat surface 6 is formed such that when the tool outer diameter D is greater than $\phi$ 1.5 mm, the width W is 0.01 mm $\leq$ W $\leq$ 0.3 mm, and when the tool outer diameter D is $\phi$ 1.5 mm or less, the width W is 0.01 mm $\leq$ W $\leq$ 0.2D. Therefore, any gouging and adhesion of swarf due to an increase in cutting resistance is minimized, the progress of wear of the flat surface 6 is minimized, and it is possible to obtain a machined surface having excellent glossiness equivalent to or better than that obtained when finishing with the ball blades 5.

Thus, the present embodiment is a ball end mill suitable for finishing, with which it is possible to obtain a high-gloss machined surface in the cutting of a flat surface orthogonal to a tool rotation axis a, such as the bottom surface of a die, using the tool tip, and it is possible to omit a polishing step or reduce the number of polishing man-hours.

Test examples supporting the effects of the present embodiment shall next be described.

<Test Example 1>

Test Example 1 is for confirming the appropriate formation range of the flat surface 6 on the basis of the positions of the central cutting blades 7 formed by providing the flat surface 6. In a tool tip view such as is shown in FIG. 3, samples were created in which the positions of the central cutting blades 7 were changed by changing the separation distance X, in the directions along the central cutting blades 7, between the intersection points P1 between the central cutting blades 7 or the extensions 8 of the central cutting blades 7 and the normal 9 to the central cutting blades 7 passing through the tool rotation axis a or of the extensions 8 of the central cutting blades 7, and the intersection points P2 between the ridgelines 10 on the sides further from the ball blades 5 among the ridgelines 10 formed of the flat surface 6 and the tip-end flanks 4 (first flanks 4a) and the edges of the tip ends of the swarf discharge grooves 2 having the ball blades 5 and the central cutting blades 7 continuous with the ball blades 5. Glossiness was evaluated for machined surfaces obtained when a workpiece was cut under the machining conditions listed below, using these samples.

Specifically, using cases in which the tool outer diameter D was $\phi$ 6 mm, the shank diameter was $\phi$ 6 mm, and the effective length was 30 mm, and cases in which the tool outer diameter D was $\phi$ 3 mm, the shank diameter was $\phi$ 6 mm, and the effective length was 12 mm, the glossiness was evaluated by visual observation of machined surfaces obtained when a flat surface orthogonal to the tool rotation axis *a* was machined using the tool tip for machining times of both 20 minutes and 60 minutes. Regarding the tool specifications in Test Example 1, the width W of the flat surface 6 (in FIG. 3, the space between the two ridgelines 10 formed by the flat surface 6 and the tip-end flanks 4 (first flanks 4a) of the pair of ball blades 5) was 0.02 mm when the tool outer diameter D was $\phi$ 6 mm, and the width W of the flat surface 6 was 0.1 mm when the tool outer diameter D was $\phi$ 3 mm. In terms of tool production, for a tool in which a diameter ratio X/D of the separation distance X to the tool outer diameter D (hereinafter referred to simply as the "diameter ratio X/D") was 0, i.e., the separation distance X was 0.00, the width W was 0.1 mm when the tool outer diameter D was $\phi$ 6 mm and the width W was 0.05 mm when the tool outer diameter D was $\phi$ 3 mm, and for a tool in which the diameter ratio X/D was -0.01, the width W was 0.2 mm when the tool outer diameter D was $\phi$ 6 mm and the width W was 0.1 mm when the tool outer diameter D was $\phi$ 3 mm.

[Machining conditions when tool outer diameter D was $\phi$ 6 mm]

Workpiece: pre-hardened steel (30 HRC)
Rotation speed: 13,000 min$^{-1}$
Feed rate: 1,500 mm/min
Depth of cut in axial direction: 0.05 mm
Depth of cut in radial direction: 0.1 mm
Coolant: water-soluble cutting fluid

[Machining conditions when tool outer diameter D was $\phi$ 3 mm]

Workpiece: pre-hardened steel (30 HRC)
Rotation speed: 19,000 min$^{-1}$
Feed rate: 950 mm/min
Depth of cut in axial direction: 0.05 mm
Depth of cut in radial direction: 0.05 mm
Coolant: water-soluble cutting fluid

[Results]

Table 1 below shows the specifications (separation distance X, diameter ratio X/D) and results of evaluating glossiness of the samples when the tool outer diameter D was $\phi$ 6 mm, and Table 2 below shows the specifications (separation distance X, diameter ratio X/D) and results of evaluating glossiness of the samples when the tool outer diameter D was $\phi$ 3 mm. Regarding the separation distance X in Tables 1 and 2 below, negative signs are used to represent cases in which the intersection points P2 are located on the negative sides of the normal 9 to the central cutting blades 7 passing through the tool rotation axis a or of the extensions 8 of the central cutting blades 7. In addition, the separation distance X when the intersection points P1 are the same as the intersection points P2 is represented as 0.00. Regarding the results of evaluating glossiness, excellent glossiness equivalent to or better than that of a machined surface finished with the ball blades 5 is indicated with ◎, glossiness better than a machined surface finished with a conventional chisel edge is indicated with ○, and glossiness equivalent to a machined surface finished with a conventional chisel edge is indicated with ×.

In the present Test Example 1, the machined surfaces finished with the ball blades 5 were flat surfaces inclined 45° in relation to the tool rotation axis *a*.

[Table 1]

| X (mm) | Diameter ratio (X/D) | Glossiness | |
|---|---|---|---|
| | | 20 min | 60 min |
| -0.06 | -0.01 | ◎ | ◎ |
| 0.00 | 0.00 | ◎ | ◎ |
| 0.12 | 0.02 | ◎ | ◎ |

(continued)

| X (mm) | Diameter ratio (X/D) | Glossiness | |
|---|---|---|---|
| | | 20 min | 60 min |
| 0.24 | 0.04 | ◎ | ◎ |
| 0.36 | 0.06 | ◎ | ◎ |
| 0.48 | 0.08 | ◎ | ◎ |
| 0.60 | 0.10 | ○ | ○ |
| 0.72 | 0.12 | × | × |
| 0.84 | 0.14 | × | × |

[Table 2]

| X (mm) | Diameter ratio (X/D) | Glossiness | |
|---|---|---|---|
| | | 20 min | 60 min |
| -0.03 | -0.01 | ◎ | ◎ |
| 0.00 | 0.00 | ◎ | ◎ |
| 0.06 | 0.02 | ◎ | ◎ |
| 0.12 | 0.04 | ◎ | ◎ |
| 0.18 | 0.06 | ◎ | ◎ |
| 0.24 | 0.08 | ◎ | ◎ |
| 0.30 | 0.10 | ○ | ○ |
| 0.36 | 0.12 | × | × |
| 0.42 | 0.14 | × | × |

As shown in Tables 1 and 2, in both cases in which the tool outer diameter D was $\phi$ 6 mm and cases in which the tool outer diameter D was $\phi$ 3 mm, regarding the specification in which the diameter ratio X/D is greater than 0.1, i.e., the specification of the separation distance X is a value greater than 10% of the tool outer diameter D, it was confirmed that the glossiness was equivalent to that obtained when finishing with a conventional chisel edge, whether the machining time was 20 minutes or 60 minutes. Supposedly the reason for this is that, due to the separation distance X being a value greater than 10% of the tool outer diameter D, the high-cutting-performance central cutting blades 7 are located at positions separated from the tool rotation axis a, the ridgelines 10 of the flat surface 6 and the tip-end flanks 4 (first flanks 4a) act as cutting blades having large negative rake angles in areas nearer to the tool rotation axis *a,* causing gouging in the machined surface, and an adequate burnishing effect could not be achieved even with the subsequent sliding contact action of the flat surface 6 on the cut surface.

In addition, regarding the specification in which the diameter ratio X/D is 0.1 or less, i.e., the specification in which the separation distance X is 10% or less of the tool outer diameter D, it was confirmed that the glossiness was better than that of a machined surface finished with a conventional chisel edge, whether the machining time was 20 minutes or 60 minutes. In particular, regarding the specification in which the diameter ratio X/D is 0.08 or less, i.e., the specification in which the separation distance X is 8% or less of the tool outer diameter D, it was confirmed that excellent glossiness equivalent to or better than that of a machined surface finished with the ball blades 5 is obtained.

As described above, according to Test Example 1, it was confirmed that a high-gloss machined surface is obtained by providing the flat surface 6 such that the central cutting blades 7 are near to the tool rotation axis a. Specifically, it was confirmed that a high-gloss machined surface is obtained by providing the flat surface 6 such that in a tool tip view, with respect to the normal 9 to the central cutting blades 7 passing through the tool rotation axis a or of the extensions 8 of the central cutting blades 7, when the sides with the ball blades 5 with which the central cutting blades 7 are continuous are the positive sides and the opposite sides are the negative sides, the intersection points P2 are located on the negative sides or on the positive sides where the separation distance X of the intersection points P1 and the intersection points P2 in the directions along the central cutting blades 7 is 0% or more and 10% or less (0.1D or less), and preferably 0% or more and 8% or less (0.08D or less), of the tool outer diameter D.

<Test Example 2>

Test Example 2 is for confirming the appropriate formation range of the flat surface 6 on the basis of the width W of the flat surface 6. In a tool tip view such as is shown in FIG. 3, the distance between two ridgelines 10 formed of the flat surface 6 and the tip-end flanks 4 (first flanks 4a) of the pair of ball blades 5 was the width W of the flat surface 6, samples were created in which the width W of the flat surface 6 was changed, and glossiness was evaluated for machined surfaces obtained when a workpiece was cut under the machining conditions listed below, using these samples.

Specifically, using cases in which the tool outer diameter D was $\phi$ 6 mm, the shank diameter was $\phi$ 6 mm, and the effective length was 30 mm, cases in which the tool outer diameter D was 3 $\phi$ mm, the shank diameter was $\phi$ 6 mm, and the effective length was 12 mm, and cases in which the tool outer diameter D was $\phi$ 1.5 mm, the shank diameter was $\phi$ 4 mm, and the effective length was 6 mm, the glossiness was evaluated by visual observation of machined surfaces obtained when a flat surface orthogonal to the tool rotation axis *a* was machined using the tool tip for machining times of both 20 minutes and 60 minutes. Regarding the tool specifications in Test Example 2, the separation distance X was set to appropriate values for each sample as shown in Tables 3 to 5 below.

[Machining conditions when tool outer diameter D was $\phi$ 6 mm]

> Workpiece: pre-hardened steel (30 HRC)
> Rotation speed: 13,000 min$^{-1}$
> Feed rate: 1,500 mm/min
> Depth of cut in axial direction: 0.05 mm
> Depth of cut in radial direction: 0.1 mm
> Coolant: water-soluble cutting fluid

[Machining conditions when tool outer diameter D was $\phi$ 3 mm]

> Workpiece: pre-hardened steel (30 HRC)
> Rotation speed: 19,000 min$^{-1}$
> Feed rate: 950 mm/min
> Depth of cut in axial direction: 0.05 mm
> Depth of cut in radial direction: 0.05 mm
> Coolant: water-soluble cutting fluid

[Machining conditions when tool outer diameter D was $\phi$ 1.5 mm]

> Workpiece: pre-hardened steel (30 HRC)
> Rotation speed: 20,000 min$^{-1}$
> Feed rate: 400 mm/min
> Depth of cut in axial direction: 0.015 mm
> Depth of cut in radial direction: 0.03 mm
> Coolant: water-soluble cutting fluid

[Results]

Table 3 below shows the specifications (width W of flat surface 6, diameter ratio W/D of the width W of the flat surface 6 to the tool outer diameter D (referred to below simply as the "diameter ratio W/D"), separation distance X) and results of evaluating glossiness of the samples when the tool outer diameter D was $\phi$ 6 mm, Table 4 below shows the specifications (width W of flat surface 6, diameter ratio W/D, separation distance X) and results of evaluating glossiness of the samples when the tool outer diameter D was $\phi$ 3 mm, and Table 5 below shows the specifications (width W of flat surface 6, diameter ratio W/D, separation distance X) and results of evaluating glossiness of the samples when the tool outer diameter D was $\phi$ 1.5 mm. Regarding the separation distance X in Tables 3 to 5 below, negative signs are used to represent cases in which the intersection points P2 are located on the negative sides of the normal 9 to the central cutting blades 7 passing through the tool rotation axis a or of the extensions 8 of the central cutting blades 7. In addition, regarding the results of evaluating glossiness, excellent glossiness equivalent to or better than that of a machined surface finished with the ball blades 5 is indicated with ◎, glossiness better than a machined surface finished with a conventional chisel edge is indicated with ○, and glossiness equivalent to a machined surface finished with a conventional chisel edge is indicated with ✕.

In the present Test Example 2, the machined surfaces finished using the ball blades 5 were flat surfaces inclined 45° in relation to the tool rotation axis *a*.

[Table 3]

| W (mm) | Diameter ratio (W/D) | X (mm) | Glossiness | |
|---|---|---|---|---|
| | | | 20 min | 60 min |
| 0.002 | 0.0003 | 0.064 | × | × |
| 0.005 | 0.001 | 0.061 | ○ | ○ |
| 0.010 | 0.002 | 0.055 | ◎ | ◎ |
| 0.050 | 0.008 | 0.006 | ◎ | ◎ |
| 0.100 | 0.017 | -0.038 | ◎ | ◎ |
| 0.150 | 0.025 | -0.041 | ◎ | ◎ |
| 0.200 | 0.033 | -0.044 | ◎ | ◎ |
| 0.300 | 0.050 | -0.047 | ◎ | ◎ |
| 0.600 | 0.100 | -0.056 | ◎ | ○ |
| 0.900 | 0.150 | -0.065 | ◎ | ○ |
| 1.200 | 0.200 | -0.074 | ◎ | ○ |
| 1.500 | 0.250 | -0.081 | ○ | × |

[Table 4]

| W (mm) | Diameter ratio (W/D) | X (mm) | Glossiness | |
|---|---|---|---|---|
| | | | 20 min | 60 min |
| 0.002 | 0.001 | 0.040 | × | × |
| 0.005 | 0.002 | 0.036 | ○ | ○ |
| 0.010 | 0.003 | 0.028 | ◎ | ◎ |
| 0.050 | 0.017 | -0.025 | ◎ | ◎ |
| 0.100 | 0.033 | -0.029 | ◎ | ◎ |
| 0.150 | 0.050 | -0.031 | ◎ | ◎ |
| 0.200 | 0.067 | -0.033 | ◎ | ◎ |
| 0.300 | 0.100 | -0.037 | ◎ | ◎ |
| 0.400 | 0.133 | -0.041 | ◎ | ○ |
| 0.500 | 0.167 | -0.045 | ◎ | ○ |
| 0.600 | 0.200 | -0.049 | ◎ | ○ |
| 0.700 | 0.233 | -0.053 | ○ | × |

[Table 5]

| W (mm) | Diameter ratio (W/D) | X (mm) | Glossiness | |
|---|---|---|---|---|
| | | | 20 min | 60 min |
| 0.002 | 0.001 | 0.024 | × | × |
| 0.005 | 0.003 | 0.020 | ○ | ○ |
| 0.010 | 0.007 | 0.013 | ◎ | ◎ |
| 0.050 | 0.033 | -0.012 | ◎ | ◎ |
| 0.100 | 0.067 | -0.014 | ◎ | ◎ |

(continued)

| W (mm) | Diameter ratio (W/D) | X (mm) | Glossiness | |
| --- | --- | --- | --- | --- |
| | | | 20 min | 60 min |
| 0.150 | 0.100 | -0.015 | ◎ | ◎ |
| 0.200 | 0.133 | -0.017 | ◎ | ◎ |
| 0.250 | 0.167 | -0.019 | ◎ | ◎ |
| 0.300 | 0.200 | -0.020 | ◎ | ◎ |
| 0.350 | 0.233 | -0.010 | ○ | ✕ |

As shown in Tables 3 to 5, in cases in which the tool outer diameter D was $\phi$ 6 mm, cases in which the tool outer diameter D was $\phi$ 3 mm, and cases in which the tool outer diameter D was $\phi$ 1.5 mm, with the specification in which the width W of the flat surface 6 is 0.002 mm, it was confirmed that whether the machining time is 20 minutes or 60 minutes, gouging occurs and the same glossiness is obtained as that of a machined surface finished with a conventional chisel edge, but with the specification in which the width W of the flat surface 6 is 0.005 mm, it was confirmed that the glossiness obtained is more favorable than that of a machined surface finished with a conventional chisel edge. Supposedly the reason for this is that when the width W of the flat surface 6 is less than 0.005 mm, there is less of a burnishing effect due to the sliding contact action of the flat surface **6.**

In addition, as shown in Tables 3 and 4, in cases in which the tool outer diameter D was $\phi$ 6 mm and cases in which the tool outer diameter D was $\phi$ 3 mm, with the specification in which the width W of the flat surface 6 is 0.01 mm or more and the diameter ratio W/D is **0.2** or less **(i.e.,** the width W of the flat surface 6 is 20% or less of the tool outer diameter D), it was confirmed that the glossiness obtained is more favorable than that of a machined surface finished with a conventional chisel edge. In particular, with the specification of the width W described above in the initial period of machining (a machining time of 20 minutes) and also the specification in which the machining time is 60 minutes and the width W of the flat surface 6 is 0.01-0.3 mm (inclusive), it was confirmed that excellent glossiness is obtained which is equivalent to or better than that of a machined surface finished with the ball blades 5.

In addition, as shown in Table 5, in cases in which the tool outer diameter D was $\phi$ 1.5 mm, with the specification in which the width W of the flat surface 6 is 0.01 mm or more and the diameter ratio W/D is 0.2 or less (i.e., the width W of the flat surface 6 is 20% or less of the tool outer diameter D and the width W of the flat surface 6 is therefore 0.3 mm or less), it was confirmed that whether the machining time is 20 minutes or 60 minutes, excellent glossiness is obtained which is equivalent to or better than that of a machined surface finished with the ball blades 5.

In addition, even in cases in which the tool outer diameter D was $\phi$ 6 mm, cases in which the tool outer diameter D was $\phi$ 3 mm, and cases in which the tool outer diameter D was $\phi$ 1.5 mm, with the specification in which the diameter ratio W/D is greater than 0.2, i.e., the specification in which the width W of the flat surface 6 is a value greater than 20% of the tool outer diameter D, it was confirmed that the glossiness obtained is more favorable than that of a machined surface finished with a conventional chisel edge in the initial period of machining (a machining time of 20 minutes), but it was confirmed that with a machining time of 60 minutes, glossiness decreases and the glossiness obtained is equivalent to that of a machined surface finished with a conventional chisel edge. Supposedly the reason for this is that due to the width W of the flat surface 6 being a value greater than 20% of the tool outer diameter D, cutting resistance increased, gouging occurred after the initial period of machining, giving rise to swarf adhesion, and an adequate burnishing effect could not be achieved even with the subsequent sliding contact action of the flat surface 6 on the cut surface.

As described above, according to Test Example 2, it was confirmed that a high-gloss machined surface is obtained by forming a flat surface such that the width W of the flat surface 6 is 0.005 mm ≤ W ≤ 0.2D.

Furthermore, it was confirmed that a higher-gloss machined surface is obtained, preferably, by forming the flat surface 6 such that the width W of the flat surface 6 is 0.01 mm ≤ W ≤ 0.3 mm when the tool outer diameter D is greater than $\phi$ 1.5 mm, and forming the flat surface 6 such that the width W of the flat surface 6 is 0.01 mm ≤ W ≤ 0.2D when the tool outer diameter D is $\phi$ 1.5 mm or less.

Though not shown in Tables 3 to 5, in the process of carrying out Test Example 2 described above, even with specifications in which the width W of the flat surface 6 is confirmed to yield excellent glossiness (◎ rating) equivalent to or better than that of a machined surface finished with the ball blades 5 described above, it was confirmed that excellent glossiness (◎ rating) equivalent to or better than that of a machined surface finished with the ball blades 5 is not necessarily obtained due to the diameter of a circle constituting the rotation locus of the flat surface 6 being a value greater than 35% of the tool outer diameter D in a tool tip view, and there are also cases in which the glossiness obtained was better (O rating) than that of a machined surface finished with a conventional chisel edge.

Supposedly the reason for this is that due to the diameter of a circle constituting the rotation locus of the flat surface 6 being a value greater than 35% of the tool outer diameter D, cutting resistance increased and a favorable cut surface could not be obtained. Therefore, it was not possible to achieve an adequate burnishing effect that would yield a high-gloss machined surface, even with the subsequent sliding contact action of the flat surface 6 on the cut surface.

As described above, it is preferable to form the flat surface 6 such that in a tool tip view, the diameter of a circle constituting the rotation locus of the flat surface 6 is 35% or less of the tool outer diameter D, i.e., the maximum distance between the tool rotation axis a and the outer edge of the flat surface 6, which would be the radius of the largest possible circle constituting the rotation locus of the flat surface 6, is 17.5% or less of the tool outer diameter D.

<Test Example 3>

Test Example 3 is a comparative evaluation between the present embodiment and a conventional product (a tip-shaped ball end mill having a chisel edge at the tool tip), and in the present embodiment, the width W of the flat surface 6 was 0.025 mm and the separation distance X was 0.005 mm. The only difference between the present embodiment and the conventional product is whether the tool tip has a flat surface 6 or a chisel edge; that is, the ball blades 5 and other components have the same specifications. Machined surfaces were obtained by cutting a workpiece under the conditions listed below, using the present embodiment having this specification and the conventional product, and the glossiness and surface roughness of these machined surfaces were evaluated.

Specifically, the tool specifications of both the present embodiment and the conventional product were that the tool outer diameter D was $\phi$ 3 mm, the shank diameter was $\phi$ 6 mm, and the effective length was 12 mm, machined surfaces were obtained by cutting a flat surface orthogonal to the tool rotation axis a (referred to below as a "0° surface") with the tool tip or with a flat surface inclined 45° relative to the tool rotation axis a (referred to below as a "45° surface") with the ball blades 5 for 20 minutes in some cases and for 60 minutes in others, and the glossiness of these machined surfaces was evaluated by visual observation (the appearance of the reflected image), and the surface roughness was evaluated by measuring arithmetic mean roughness Ra.

[Machining conditions]

Workpiece: pre-hardened steel (30 HRC)
Rotation speed: 19,000 min$^{-1}$
Feed rate: 950 mm/min
Depth of cut in axial direction: 0.05 mm
Depth of cut in radial direction: 0.05 mm
Coolant: water-soluble cutting fluid

[Results]

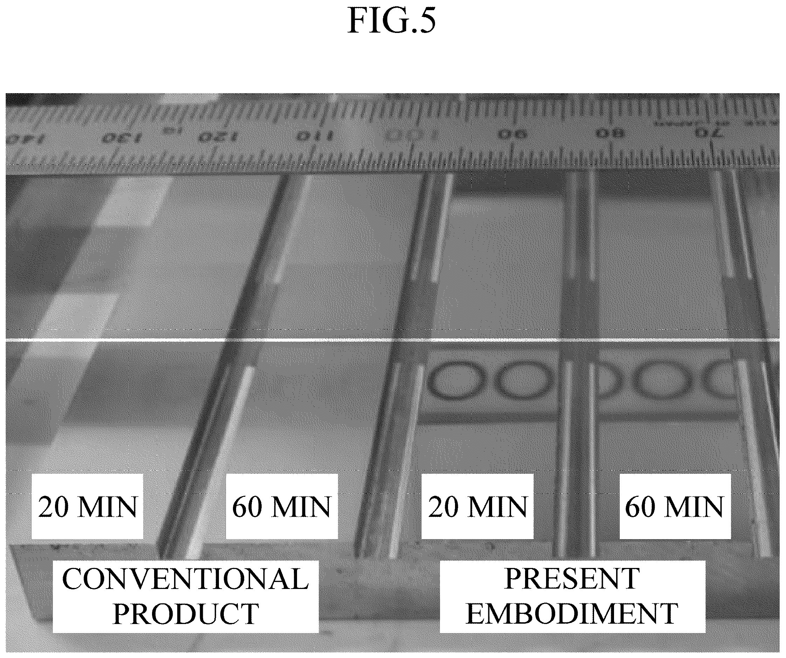

FIG. 5 shows the results of evaluating glossiness of the 0° surfaces for both the present embodiment and the conventional product. Specifically, on the back surface of a scale (metal scale) in the upper part of the image, multiple clear ○ marks were repeatedly arranged in the longitudinal direction of the scale (metal scale), the surface on which these ○ marks were repeatedly arranged was held over each machined surface (0° surface), and the appearance of the ○ marks reflected on the machined surface (0° surface) was comparatively evaluated. As shown in FIG. 5, regarding the 0° surface, the present embodiment produced a machined surface having excellent glossiness such that a clear reflected image (○ marks) was visually confirmed whether the machining time was 20 minutes or 60 minutes, whereas the conventional product produced a non-glossy machined surface in which a reflected image (○ marks) could not be confirmed. Regarding the 45° surface (the machined surface cut with the ball blades 5), as a result of comparing the present embodiment and the conventional product with a machining time of 20 minutes, no difference was found between the two because the specifications of the ball blade 5 were the same, and although not shown, it was confirmed that in both cases, it is possible to obtain a machined surface having excellent glossiness such that a clear reflected image is visually confirmed.

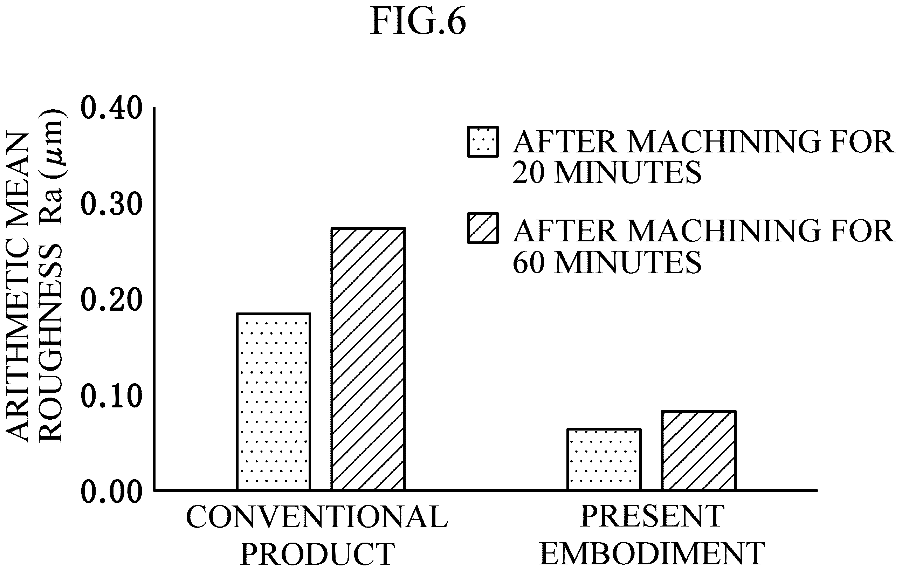

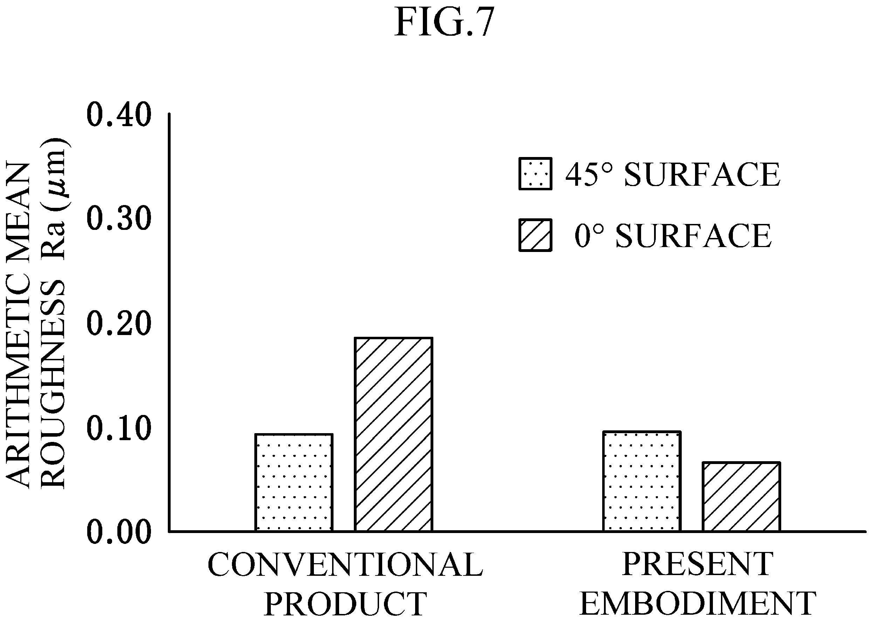

FIG. 6 is a graph of the results of measuring the arithmetic mean roughness Ra of the 0° surfaces of the present embodiment and the conventional product machined for 20 minutes and 60 minutes, and FIG. 7 is a graph of the results of measuring the arithmetic mean roughness Ra of the 45° surfaces of the present embodiment and the conventional product machined for 20 minutes.

It was confirmed that in the present embodiment, the values of the arithmetic mean roughness Ra of the machined surfaces are less than with the conventional product, as shown in FIG. 6.

As shown in FIG. 7, a 0° surface machined using a chisel edge at the tool tip will generally have greater surface roughness than a 45° surface machined using ball blades as is the case with the conventional product. However, in the present embodiment, it was confirmed that the 45° surface and the 0° surface both have favorable surface roughness and a 0° surface machined using a tool tip having the flat surface 6 has better surface roughness than a 45° surface machined using the ball blades 5, as shown in FIG. 7.

As described above, from Test Example 3, it was confirmed that in the present embodiment, due to the flat surface 6 being provided at a tool tip portion such that the central cutting blades 7 are provided near the tool rotation axis *a,* the resulting machined surface has excellent glossiness equivalent to or better than that of a surface machined using the ball blades 5, even in the machining of a flat surface orthogonal to the tool rotation axis a using the tool tip.

The present embodiment is not provided by way of limitation on the present invention; the specific configurations of constituent elements can be designed as appropriate.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1.    A ball end mill in which a plurality of swarf discharge grooves (2) opened at a tip end and leading from a tool-tip-end side to a tool-base-end side are formed in an outer periphery of a tool body (1), and ball blades (5) are provided at intersection ridgelines between rake faces (3) of the swarf discharge grooves (2) and tip-end flanks (4) of the tool body (1), the ball end mill being **characterized in that** a flat surface (6) orthogonal to a tool rotation axis (a) of the tool body (1) is provided at a tool tip portion, and intersection ridgelines between the flat surface (6) and the rake faces (3) are configured as central cutting blades (7) continuous with the ball blades (5), wherein the flat surface (6) is configured for sliding contact action on a cutting surface cut by the central cutting blades (7).

2.    The ball end mill according to claim 1, **characterized in that** the flat surface (6) is continuous with the tip-end flanks (4) and the rake faces (3) of the pair of ball blades (5), which are provided in 180 degree rotational symmetry with respect to the tool rotation axis (a).

3.    The ball end mill according to either claim 1 or 2, **characterized in that** the central cutting blades (7) are provided up to the vicinity of the tool rotation axis (a).

4.    The ball end mill according to any one of claims 1-3, **characterized in that** the flat surface (6) is continuous with the tip-end flanks (4), and the flat surface (6) is provided such that in a tool tip view, with respect to a normal (9) to the central cutting blades (7) passing through the tool rotation axis (a) or to extensions (8) of the central cutting blades (7), taking the ball-blade sides with which the central cutting blades are continuous as positive sides and the sides opposite thereto as negative sides, intersection points P2 described in (2) below are either located on the negative sides or located on the positive sides where a separation distance (X) in a direction between intersection points P1 described in (1) below and intersection points P2 along the central cutting blades (7) is 0-10% (inclusive) of a tool outer diameter D;

    (1) Intersection points P1: in a tool tip view, intersection points between central cutting blades (7) or extensions (8) of the central cutting blades (7), and a normal (9) to the central cutting blades (7) passing through the tool rotation axis (a) or to the extensions (8) of the central cutting blades (7),
    (2) Intersection points P2: in a tool tip view, intersection points between ridgelines (10) on the sides further from the ball blades (5) among ridgelines (10) formed of the flat surface (6) and the tip-end flanks (4), and the edges of the tip ends of the swarf discharge grooves (2) having the ball blades (5) and the central cutting blades (7) continuous with the ball blades (5).

5.    The ball end mill according to any one of claims 1-4, **characterized in that** in a tool tip view of the flat surface (6), taking a space between two ridgelines (10) formed of the flat surface (6) and the tip-end flanks (4) of the pair of ball blades (5) provided in 180 degree rotational symmetry with respect to the tool rotation axis (a) to be a width W of the flat surface (6), the width W is set to the following range:

$$0.005 \text{ mm} \leq W \leq 0.2D \text{ (D being the tool outer diameter).}$$

6. The ball end mill according to claim 5, **characterized in that** the width W of the flat surface is set to the following ranges:

> If tool outer diameter D > $\phi$ 1.5 mm, then 0.01 mm $\leq$ W $\leq$ 0.3 mm;
> If tool outer diameter D $\leq$ $\phi$ 1.5 mm, then 0.01 mm $\leq$ W $\leq$ 0.2D.

**Patentansprüche**

1. Kugelschaftfräser, bei dem mehrere Spanauswurfnuten (2), die an einem äußersten Ende geöffnet sind und von einer Werkzeugendseite zu einer Werkzeugbasisseite führen, in einem Außenumfang eines Werkzeugkörpers (1) ausgebildet sind und Kugelschneiden (5) an Kreuzungslinien zwischen Spanflächen (3) der Spanauswurfnuten (2) und endseitigen Flanken (4) des Werkzeugkörpers (1) ausgebildet sind, wobei der Kugelschaftfräser **dadurch gekennzeichnet ist, dass** eine flache Oberfläche (6) orthogonal zu einer Werkzeugdrehachse (a) des Werkzeugkörpers (1) an einem Werkzeugendteil vorgesehen ist und Schnittlinien zwischen der flachen Oberfläche (6) und den Spanflächen (3) als zentrale Schneidkanten (7) ausgebildet sind, die kontinuierlich mit den Kugelschneiden (5) sind, wobei die flache Oberfläche (6) zum Gleitkontakt auf einer Schneidfläche, die durch die zentralen Schneidkanten (7) geschnitten wird, ausgebildet ist.

2. Kugelschaftfräser nach Anspruch 1, **dadurch gekennzeichnet, dass** die flache Oberfläche (6) mit den endseitigen Flanken (4) und den Spanflächen (3) des Paars von Kugelschneiden (5) kontinuierlich sind, die in 180 Grad Drehsymmetrie in Bezug auf die Werkzeugdrehachse (a) vorgesehen sind.

3. Kugelschaftfräser nach Anspruch 1 oder 2, **dadurch gekennzeichnet, dass** die zentralen Schneidkanten (7) bis zur Nähe der Werkzeugdrehachse (a) vorgesehen sind.

4. Kugelschaftfräser nach einem der Ansprüche 1-3, **dadurch gekennzeichnet, dass** die flache Oberfläche (6) kontinuierlich mit den endseitigen Flanken (4) ist und die flache Oberfläche (6) derart vorgesehen ist, dass, in einer Werkzeugdraufsicht in Bezug auf eine Normale (9) an die zentralen Schneidkanten (7), die durch die Werkzeugachse (a) geht, oder in Bezug auf Verlängerungen (8) der zentralen Schneidkanten (7), wobei die Kugelkantenseiten, mit denen die zentralen Schneidkanten kontinuierlich sind, als positive Seiten angesehen werden und die Seiten entgegengesetzt dazu als negative Seiten angesehen werden, Schnittpunkte P2, die unten in (2) beschrieben sind, sich entweder auf den negativen Seiten oder auf den positiven Seiten befinden, wobei ein Trennabstand (X) in einer Richtung zwischen Schnittpunkten P1, die unten in (1) beschrieben sind, und Schnittpunkten (P2) entlang der zentralen Schneidkanten (7) 0-10% (einschließlich) eines Werkzeugaußendurchmessers D ist;

> (1) Schnittpunkte P1: in einer Werkzeugdraufsicht, Schnittpunkte zwischen zentralen Schneidkanten (7) oder Verlängerungen (8) der zentralen Schneidkanten (7) und einer Normalen (9) an die zentralen Schneidkanten (7), die durch die Werkzeugdrehachse (a) oder die Verlängerungen (8) der zentralen Schneidkanten (7) geht, ist,
> (2) Schnittpunkt P2: in einer Werkzeugdraufsicht, Schnittpunkte zwischen Kanten (10) auf den Seiten weiter entfernt von den Kugelkanten (5) von Kanten (10), die aus der flachen Oberfläche (6) und den endseitigen Flanken (4) ausgebildet sind, und den Kanten der äußersten Enden der Spanauswurfnuten (2) mit den Kugelkanten (5) und den zentralen Schneidkanten (7), die kontinuierlich mit den Kugelkanten (5) sind, sind.

5. Kugelschaftfräser nach einem der Ansprüche 1-4, **dadurch gekennzeichnet, dass** in einer Werkzeugdraufsicht auf die flache Oberfläche (6), wobei ein Raum zwischen zwei Kanten (10), die aus der flachen Oberfläche (6) und den endseitigen Flanken (4) des Paars von Kugelkanten (6), die in 180 Grad Drehsymmetrie in Bezug auf die Werkzeugdrehachse (a) vorgesehen sind, eine Breite W der flachen Fläche (6) ist, die Breite W auf den folgenden Bereich eingestellt wird:

$$0{,}005 \text{ mm} \leq W \leq 0{,}2D \text{ (wobei D der Werkzeugaußendurchmesser ist).}$$

6. Kugelschaftfräser nach Anspruch 5, **dadurch gekennzeichnet, dass** die Breite W der flachen Oberfläche auf die folgenden Bereiche eingestellt ist:

> Wenn Werkzeugaußendurchmesser D > $\phi$ 1,5 mm, dann 0,01 mm $\leq$ W $\leq$ 0,3 mm;
> Wenn Werkzeugaußendurchmesser D $\leq$ $\phi$ 1,5 mm, dann 0,01 mm $\leq$ W $\leq$ 0,2D.

**Revendications**

1. Fraise à bout sphérique dans laquelle une pluralité de rainures de décharge de copeaux (2) ouvertes à une extrémité de pointe et menant d'un côté d'extrémité de pointe d'outil à un côté d'extrémité de base d'outil sont formées dans une périphérie extérieure d'un corps d'outil (1), et des lames sphériques (5) sont prévues au niveau des arêtes d'intersection entre les faces de coupe (3) des rainures d'évacuation de copeaux (2) et les flancs d'extrémité de pointe (4) du corps d'outil (1), la fraise à bout sphérique étant **caractérisée en ce qu'**une surface plane (6) orthogonale à un axe de rotation (a) du corps d'outil (1) est prévue au niveau d'une partie d'extrémité d'outil, et les lignes de crête d'intersection entre la surface plane (6) et les faces de coupe (3) sont configurées comme des lames de coupe centrales (7) continues avec les lames sphériques (5), dans laquelle la surface plane (6) est configurée pour une action de contact glissant sur une surface de coupe coupée par les lames de coupe centrales (7).

2. Fraise à bout sphérique selon la revendication 1, **caractérisée en ce que** la surface plane (6) est continue avec les flancs d'extrémité de pointe (4) et les faces de coupe (3) de la paire de lames sphériques (5), qui sont prévues en symétrie de rotation à 180 degrés par rapport à l'axe de rotation (a) d'outil.

3. Fraise à bout sphérique selon l'une quelconque des revendications 1 ou 2, **caractérisée en ce que** les lames de coupe centrales (7) sont prévues jusqu'au voisinage de l'axe de rotation (a) d'outil.

4. Fraise à bout sphérique selon l'une quelconque des revendications 1 à 3, **caractérisée en ce que** la surface plane (6) est continue avec les flancs d'extrémité de pointe (4), et la surface plane (6) est prévue de telle sorte que, dans une vue de pointe d'outil, par rapport à une normale (9) aux lames de coupe centrales (7) passant par l'axe de rotation (a) d'outil ou aux extensions (8) des lames de coupe centrales (7), en prenant les côtés des lames sphériques avec lesquels les lames de coupe centrales sont continues comme côtés positifs et les côtés opposés à ceux-ci comme côtés négatifs, les points d'intersection P2 décrits en (2) ci-dessous sont soit situés sur les côtés négatifs, soit situés sur les côtés positifs où une distance de séparation (X) dans une direction entre les points d'intersection P1 décrits en (1) ci-dessous et les points d'intersection P2 le long des lames de coupe centrales (7) est comprise entre 0 et 10 % (inclus) d'un diamètre extérieur D d'outil ;

   (1) Points d'intersection P1 : dans une vue de pointe d'outil, points d'intersection entre les lames de coupe centrales (7) ou les extensions (8) des lames de coupe centrales (7) et une normale (9) aux lames de coupe centrales (7) passant par l'axe de rotation d'outil (a) ou aux extensions (8) des lames de coupe centrales (7),
   (2) Points d'intersection P2 : dans une vue de pointe d'outil, points d'intersection entre les arêtes (10) sur les côtés les plus éloignés des lames sphériques (5) parmi les arêtes (10) formées par la surface plane (6) et les flancs d'extrémité de pointe (4), et les bords des extrémités de pointes des rainures d'évacuation de copeaux (2) ayant les lames sphériques (5) et les lames de coupe centrales (7) continues avec les lames sphériques (5).

5. Fraise à bout sphérique selon l'une quelconque des revendications 1 à 4, **caractérisée en ce que** dans une vue de pointe d'outil de la surface plane (6), en considérant l'espace entre deux lignes de crête (10) formées par la surface plane (6) et les flancs d'extrémité de pointe (4) de la paire de lames sphériques (5) disposées en symétrie de rotation à 180 degrés par rapport à l'axe de rotation (a) d'outil comme étant la largeur W de la surface plane (6), la largeur W est définie dans la plage suivante :

$$0{,}005 \text{ mm} \leq W \leq 0{,}2D \text{ (D étant le diamètre extérieur de l'outil).}$$

6. Fraise à bout sphérique selon la revendication 5, **caractérisée en ce que** la largeur W de la surface plane est définie dans les plages suivantes :

   Si le diamètre extérieur D d'outil > Ø 1,5 mm, alors $0{,}01 \text{ mm} \leq W \leq 0{,}3 \text{ mm}$ ;
   Si le diamètre extérieur D d'outil ≤ Ø 1,5 mm, alors $0{,}01 \text{ mm} \leq W \leq 0{,}2D$.

# FIG.1

EP 4 245 447 B1

FIG.2

# FIG.3

# FIG.4

(a) P2 LOCATED ON POSITIVE SIDES

(b) P2 LOCATED ON POSITIVE SIDES

(c) P2 LOCATED ON NEGATIVE SIDES

(d) P2 LOCATED ON NEGATIVE SIDES

EP 4 245 447 B1

FIG.5

FIG.6

# FIG.7

EP 4 245 447 B1

FIG.8

# FIG.9

( a )

( b )

EP 4 245 447 B1

FIG.10

EP 4 245 447 B1

FIG.11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3646976 A1
- JP H01228711 A
- JP 2000233311 A
- US 7909545 B2